(19) Europäisches Patentamt / European Patent Office / Office européen des brevets

(11) **EP 4 212 268 A1**

(12) **EUROPEAN PATENT APPLICATION**
published in accordance with Art. 153(4) EPC

(43) Date of publication:
**19.07.2023 Bulletin 2023/29**

(21) Application number: **21866872.1**

(22) Date of filing: **10.09.2021**

(51) International Patent Classification (IPC):
**B22F 10/366** (2021.01)　**B22F 1/00** (2022.01)
**B22F 3/24** (2006.01)　**B22F 10/38** (2021.01)
**B33Y 10/00** (2015.01)　**B33Y 70/00** (2020.01)
**B33Y 80/00** (2015.01)　**C22C 19/05** (2006.01)

(52) Cooperative Patent Classification (CPC):
**B22F 1/00; B22F 3/105; B22F 3/16; B22F 3/24;
B22F 10/366; B22F 10/38; B33Y 10/00;
B33Y 70/00; B33Y 80/00; C22C 19/05;** Y02P 10/25

(86) International application number:
**PCT/JP2021/033348**

(87) International publication number:
**WO 2022/054915 (17.03.2022 Gazette 2022/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.09.2020 JP 2020152719**

(71) Applicant: **KAWASAKI JUKOGYO KABUSHIKI
KAISHA**
**Kobe-shi, Hyogo 650-8670 (JP)**

(72) Inventors:
• **OKADA, Ryutaro**
**Hyogo, 650-8670 (JP)**
• **HIBINO, Shinya**
**Hyogo, 650-8670 (JP)**
• **FUJIMITSU, Kazushige**
**Hyogo, 650-8670 (JP)**

(74) Representative: **Dehns**
**St. Bride's House**
**10 Salisbury Square**
**London EC4Y 8JD (GB)**

(54) **SHAPED ARTICLE MANUFACTURING METHOD, INTERMEDIATE, AND SHAPED ARTICLE**

(57)     A shaped article production method includes: fabricating an intermediate article by powder bed fusion using a powder of a gamma prime precipitation strengthening Ni-based alloy; and heat-treating the intermediate article. The Ni-based alloy contains, in percent by mass, 7.0 to 17.0% Cr, 7.0 to 12.0% Co, 5.0 to 8.0% Al + Ti, 2.0 to 12.0% W, 1.5 to 4.4% Nb + Ta, 2.3% or less Mo, 0.3% or less C, 2.0% or less Hf, and 0.2% or less Zr. The fabricating the intermediate article includes applying a laser beam to a layer (3) of the powder along scan lines (4) parallel to one another. In applying the laser beam, a value obtained by dividing a pitch between the scan lines (4) by a laser spot diameter is in the range of 0.6 to 1.1.

FIG. 1

**Description**

**Technical Field**

The present invention relates to a method of producing a shaped article and further relates to an intermediate article obtained at an intermediate stage in the method and a shaped article obtained at a final stage in the method.

**Background Art**

A method of producing a shaped article by fabricating an intermediate article by powder bed fusion using a powder of a Ni-based alloy and heat-treating the intermediate article is conventionally known (see Patent Literature 1, for example). The shaped article produced by this production method and made of the Ni-based alloy is used as a high-temperature part such as that of a gas turbine engine.

In some cases, a gamma prime precipitation strengthening Ni-based alloy is used as the Ni-based alloy constituting the powder. The gamma prime precipitation strengthening Ni-based alloy is a Ni-based alloy having a composition prepared such that heat treatment of the alloy leads to precipitation of a gamma prime ($Ni_3(Al,Ti)$) phase for strength enhancement.

**Citation List**

**Patent Literature**

PTL 1: Japanese Laid-Open Patent Application Publication No. 2013-96013

**Summary of Invention**

**Technical Problem**

In the case of using a powder of a gamma prime precipitation strengthening Ni-based alloy as described above, a shaped article with excellent creep properties is difficult to produce by common powder bed fusion.

It is therefore an object of the present invention to provide: a shaped article production method capable of producing a shaped article with excellent creep properties; and a shaped article obtained by the shaped article production method.

**Solution to Problem**

As a result of intensive studies with the goal of solving the above problem, the present inventors have found that in powder bed fusion where a laser beam is applied to a layer of a powder along scan lines parallel to one another, a value obtained by dividing the pitch between the scan lines by the laser spot diameter is correlated with the creep properties of the shaped article. The present invention has been made based on this finding.

That is, a shaped article production method of the present invention includes: fabricating an intermediate article by powder bed fusion using a powder of a gamma prime precipitation strengthening Ni-based alloy; and heat-treating the intermediate article, wherein the Ni-based alloy contains, in percent by mass, 7.0 to 17.0% Cr, 7.0 to 12.0% Co, 5.0 to 8.0% Al + Ti, 2.0 to 12.0% W, 1.5 to 4.4% Nb + Ta, 2.3% or less Mo, 0.3% or less C, 2.0% or less Hf, and 0.2% or less Zr, the fabricating the intermediate article includes applying a laser beam to a layer of the powder along scan lines parallel to one another, and in applying the laser beam, a value obtained by dividing a pitch between the scan lines by a laser spot diameter is in the range of 0.6 to 1. 1.

With the above features, a shaped article with excellent creep properties can be produced.

An intermediate article of the present invention is an intermediate article made of a Ni-based alloy, the intermediate article including columnar crystal grains of a dendritic crystal structure, wherein the Ni-based alloy contains, in percent by mass, 7.0 to 17.0% Cr, 7.0 to 12.0% Co, 5.0 to 8.0% Al + Ti, 2.0 to 12.0% W, 1.5 to 4.4% Nb + Ta, 2.3% or less Mo, 0.3% or less C, 2.0% or less Hf, and 0.2% or less Zr, a spacing between branches of a primary dendritic crystal of the dendritic crystal structure is less than 3 $\mu$m, and a degree of orientation in {100} plane in a cut surface perpendicular to a longitudinal direction of the columnar crustal grains is 30% or more.

An intermediate article fabricated by powder bed fusion includes columnar crystal grains of a dendritic crystal structure. In a shaped article produced by casting, the spacing between the branches of the primary dendritic crystal of the dendritic crystal structure is as large as more than about 40 $\mu$m. In contrast, in an intermediate article fabricated by powder bed fusion using a laser beam as a heat source, the spacing between the branches of the primary dendritic crystal of the dendritic crystal structure is as small as less than 3 μm. Additionally, when, in the powder bed fusion, the value obtained by dividing the pitch between the scan lines by the laser spot diameter is in the range of 0.6 to 1.1 as described above, the degree of orientation in {100} plane in a specified cut surface (a cut surface perpendicular to the longitudinal direction of the columnar crystal grains) is 30% or more.

A shaped article of the present invention is a shaped article made of a Ni-based alloy, the shaped article including columnar crystal grains of a non-dendritic crystal structure, wherein the Ni-based alloy contains, in percent by mass, 7.0 to 17.0% Cr, 7.0 to 12.0% Co, 5.0 to 8.0% Al + Ti, 2.0 to 12.0% W, 1.5 to 4.4% Nb + Ta, 2.3% or less Mo, 0.3% or less C, 2.0% or less Hf, and 0.2% or less Zr, and when shapes of the columnar crystal grains in an observation zone on a cut surface parallel to the longitudinal direction of the columnar crystal grains are approximated by ellipses each of which has an area equal to that of a corresponding one of the columnar crystal grains, a crystal grain aspect ratio calculated by dividing a sum of major-to-minor axis ratios of the ellipses by the number of the columnar crystal grains in the observation zone is 2.70 or more.

Heat treatment of the intermediate article as defined above leads to the loss of the dendritic crystal structure, but allows the resulting shaped article to have a crystal grain aspect ratio of 2.70 or more. That is, the shaped article having the above features is a shaped article with excellent creep properties.

**Advantageous Effects of Invention**

The present invention makes it possible to produce a shaped article with excellent creep properties.

**Brief Description of Drawings**

FIG. 1 is a diagram for explaining a fabrication step of fabricating an intermediate article by powder bed fusion.
FIG. 2 is a diagram for explaining a degree of orientation in {100} plane in a specified cut surface.
FIG. 3 shows an example of a heat treatment step.
FIG. 4 is a side view of a test specimen used in a creep rupture test.
FIG. 5 is a graph showing the relationship between the degree of orientation of the intermediate article and the time to rupture in the creep rupture test for Examples 1 to 5 and Comparative Examples 1 to 3.
FIG. 6 is a graph showing the relationship between the crystal grain aspect ratio of the shaped article and the time to rupture in the creep rupture test for Examples 1 to 5 and Comparative Examples 1 to 3.

**Description of Embodiments**

A shaped article production method according to one embodiment of the present invention includes a fabrication step of fabricating an intermediate article by powder bed fusion and a heat treatment step of heat-treating the fabricated intermediate article. Hereinafter, each step will be described in detail.

fabrication step>

In the powder bed fusion, a powder of a gamma prime precipitation strengthening Ni-based alloy is used. In the present embodiment, the heat source used in the powder bed fusion to melt the powder is a laser beam, although the heat source may be an electron beam in some cases.

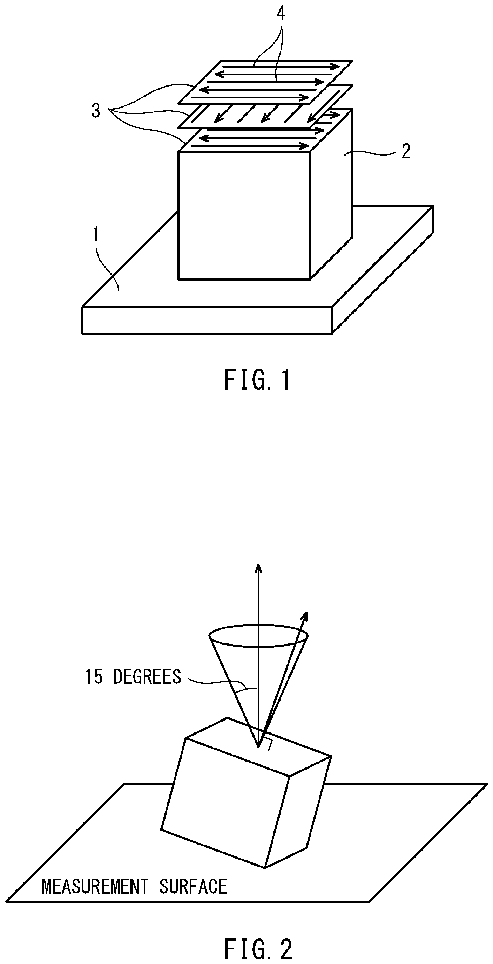

In the powder bed fusion, as shown in FIG. 1, a layer 3 of the powder is formed on a platform 1, and a laser beam is applied to the layer 3 along scan lines 4 parallel to one another. The laser beam applied is focused in the vicinity of the surface of the layer 3. The location, shape, and length of each scan line 4 are determined depending on the cross-sectional shape of the intermediate article to be fabricated (the intermediate article has the same shape as the shaped article to be finally produced). For example, the scan lines 4 may be straight or curved.

FIG. 1 illustrates an example of fabrication of a quadrangular prism-shaped intermediate article. In FIG. 1, the laser scan direction is opposite between the adjacent scan lines 4. However, the laser scan direction may be the same for all the scan lines 4.

The application of a laser beam to the layer 3 results in melting and solidification of a part or the whole of the layer 3. After that, the platform 1 is lowered by a distance corresponding to the thickness of the layer 3, and a new layer (hereinafter referred to as "top layer") 3 of the powder is formed on the previously formed layer (hereinafter referred to as "previous layer") 3. A laser beam is then applied to the top layer 3 along the parallel scan lines 4. The configuration made up of the previous layer 3 and the top layer 3 formed on the previous layer 3 is a bed 2, which includes the already-shaped portion and the unmelted powder.

The directions of the scan lines 4 may be the same or different between the top layer 3 and previous layer 3. In the case where the directions of the scan lines 4 are different between the top layer 3 and previous layer 3, the angle of the scan lines 4 of the top layer 3 with respect to the scan lines 4 of the previous layer 3 (the angle will be referred to as "scan rotation angle" hereinafter) can be determined as appropriate. For example, in FIG. 1, the scan rotation angle is 90 degrees.

The above process is repeated, and finally the unmelted powder is removed from the bed 2. In this manner, the intermediate article is fabricated. Such an intermediate article includes columnar crystal grains of a dendritic crystal structure. In the dendritic crystal structure, the spacing between the branches of the primary dendritic crystal is as small as less than 3 μm. The longitudinal direction of the columnar crystal grains is the layer stacking direction in the fabrication of the intermediate article (the upward/downward direction in FIG. 1).

The particle size distribution of the powder used in the powder bed fusion ranges, for example, from 5 to 75 μm and desirably ranges from 15 to 63 μm. The thickness of each of the layers 3 is, for example, from 20 to 60 μm.

The Ni-based alloy constituting the powder contains, in percent by mass (the same applies hereinafter), 7.0 to 17.0% Cr, 7.0 to 12.0% Co, 5.0 to 8.0% Al + Ti, 2.0 to 12.0% W, and 1.5 to 4.4% Nb + Ta as essential components other than Ni. Examples of such a Ni-based alloy include IN 738 ("IN" is an abbreviation of Inconel™, and the same applies hereinafter), IN 738LC, CM 247LC, and Mar-M247. As to Nb and Ta, the Ni-based alloy may be devoid of either Nb or Ta.

The more desired contents of the essential components are as follows: 7.0 to 10.0% Cr, 8.0 to 11.0% Co, 5.0 to 7.5% Al + Ti, 8.0 to 11.0% W, and 2.0 to 4.0% Nb + Ta.

The Ni-based alloy may contain at least one of 2.3% or less (desirably 0.2 to 1.0%) Mo, 0.3% or less (desirably 0.01 to 0.2%) C, 2.0% or less (desirably 0.5 to 2.0%) Hf, and 0.2% or less Zr as an optional component. The balance of the Ni-based alloy, namely the portion other than the components mentioned above, is constituted by Ni and inevitable impurities.

In the present embodiment, in applying a laser beam to each layer 3, a value (L/D) obtained by dividing a pitch L between the scan lines 4 by a laser spot diameter D is in the range of 0.6 to 1.1. The laser spot diameter D refers to a beam diameter at a point at which the intensity of the laser beam falls down to $1/e^2$ of the peak value (i.e., the intensity of the laser beam is about 13.5% of the peak value). Some powder bed fusion devices employing lasers permit the user to set the laser spot diameter, and others do not.

The laser spot diameter D is, for example, from 0.02 to 0.20 mm and desirably from 0.05 to 0.15 mm. The pitch L between the scan lines 4 is, for example, from 0.05 to 0.08 mm. Desirably, the LID is in the range of 0.6 to 0.9.

The laser scan speed is, for example, from 500 to 3000 mm/s, desirably from 600 to 2000 mm/s, and more desirably from 700 to 1500 mm/s. The laser output is, for example, from 100 to 400 W, desirably from 130 to 350 W, and more desirably from 150 to 300 W.

By virtue of the fact that in applying a laser beam to each layer 3, the value (L/D) obtained by dividing the pitch L between the scan lines 4 by the laser spot diameter D is in the range of 0.6 to 1.1 as described above, a degree of orientation in {100} plane in a cut surface perpendicular to the longitudinal direction of the columnar crystal grains of the intermediate article (this cut surface will be referred to as "specified cut surface" hereinafter) is 30% or more (and can be 35% or more depending on the conditions).

The "degree of orientation in {100} plane" refers to the proportion of the area occupied by particular crystal grains in a measurement surface, the particular crystal grains being crystal grains for which the angle between the direction of the normal to the measurement surface (the upward direction in FIG. 2) and the direction of the normal to the {100} plane thereof is not more than 15 degrees as shown in FIG. 2. The proportion of the area is calculated through EBSD (electron backscatter diffraction). For reference, a cast article made of a Ni-based alloy generally exhibits a long creep rupture lifetime when exposed to a creep load acting in a direction perpendicular to the {100} plane.

<Heat treatment step>

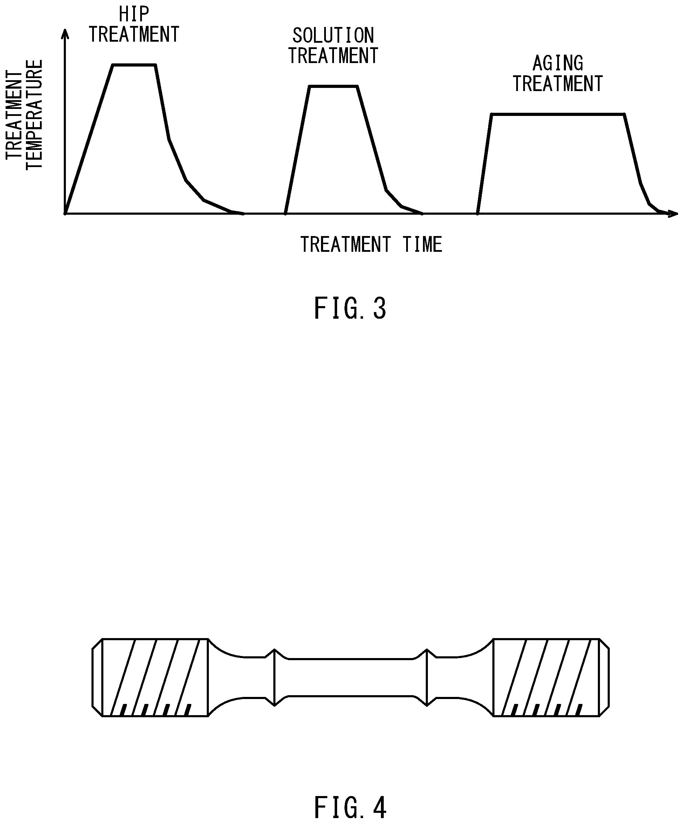

The heat treatment performed in the heat treatment step includes, for example, HIP (hot isostatic pressing) treatment, solution treatment, and aging treatment as shown in FIG. 3. The HIP treatment may be omitted, or both the HIP treatment and solution treatment may be omitted.

In the HIP treatment, the intermediate article is placed into a furnace charged with an inert gas, and the interior of the furnace is heated and pressurized for a predetermined time. An example of inert gas is argon. The heating/pressurization time is, for example, from 0.5 to 6 hours and desirably from 1 to 5 hours. The heating temperature is, for example, from 1150 to 1300 °C and desirably from 1180 to 1260 °C. The pressure in the pressurization is, for example, from 80 to 160 MPa and desirably from 90 to 150 MPa.

In the solution treatment, the intermediate article is heated in the air, in a vacuum, or in an inert gas atmosphere for a predetermined time and is then cooled. The cooling technique may be any of air cooling (including gas fan cooling), water cooling, and oil cooling. The heating time is, for example, from 0.5 to 6 hours and desirably from 1 to 4 hours. The heating temperature is, for example, from 1150 to 1300 °C.

In the aging treatment, the intermediate article is heated in the air, in a vacuum, or in an inert gas atmosphere for a relatively long predetermined time and is then cooled. The cooling technique may be any of air cooling (including gas fan cooling), water cooling, oil cooling, and furnace cooling. In the aging treatment, the heating and cooling may be repeated. In each heating process, for example, the heating time is desirably from 1 to 48 hours. The heating temperature is, for example, from 700 to 1200 °C.

The shaped article is produced through the fabrication and heat treatment steps described above. The shaped article includes columnar crystal grains of a non-dendritic crystal structure since the dendritic crystal structure is lost by the heat treatment.

In the obtained shaped article, a crystal grain aspect ratio is 2.70 or more. The crystal grain aspect ratio is defined as follows: when the shapes of the columnar crystal grains in an observation zone on a cut surface parallel to the longitudinal direction of the columnar crystal grains (a cut surface perpendicular to the specified cut surface) are approximated by ellipses each of which has an area equal to that of a corresponding one of the columnar crystal grains, the crystal grain aspect ratio is a value calculated by dividing the sum of the major-to-minor axis ratios of the ellipses by the number of the columnar crystal grains in the observation zone. That is, the crystal grain aspect ratio is determined from the formula given below. The crystal grain aspect ratio may be 5.00 or less or may be 4.00 or less.

[Mathematical Formula 1]

$$\nu = \frac{1}{N} \sum_{1}^{N} \nu_i$$

ν: Crystal grain aspect ratio
$\nu_i$: Major-to-minor axis ratio of i-th columnar crystal grain
N: Number of columnar crystal grains

The shaped article obtained by the production method of the present embodiment is a shaped article with excellent creep properties.

**Examples**

Hereinafter, the present invention will be described using examples. The present invention is not limited to the examples described below.

(Example 1)

Powder bed fusion using a powder containing alloy components corresponding to those of CM 247LC was carried out to fabricate an intermediate article in the shape of a rectangular parallelepiped (10 mm × 10 mm × 60 mm) extending longitudinally in the layer stacking direction. The particle size distribution of the powder ranged from 16 to 45 μm. Analysis of the alloy components of the powder revealed that the contents of components other than Ni were as follows: 8.0% Cr, 9.1% Co, 5.5% Al, 0.7% Ti, 9.5% W, 0% Nb, 3.1% Ta, 0.5% Mo, 0.06% C, 1.5% Hf, and 0.01% Zr (the content of inevitable impurities is omitted).

The powder bed fusion device used was EOS M290 manufactured by EOS. In this device, the laser spot diameter D is set to 0.08 mm by the manufacturer. In the shaped article production, the thickness of layers was 40 μm, and a laser beam was applied to the layers with a scan line-to-scan line pitch of 0.05 mm, a laser scan speed of 1000 mm/s, a laser output of 180 W, and a scan rotation angle of 90 degrees.

The above intermediate article was subjected to HIP treatment, solution treatment, and aging treatment to obtain a shaped article. In the HIP treatment, the inert gas used was argon, the heating/pressurization time was 4 hours, the heating temperature was 1250 °C, and the pressure in the pressurization was 140 MPa. In the solution treatment, the intermediate article was heated in an argon atmosphere and then cooled. The heating time was 2 hours and the heating temperature was 1250 °C. In the aging treatment, heating of the intermediate article in an argon atmosphere and the subsequent cooling were performed two times. In the first heating, the heating time was 4 hours and the heating temperature was 1080 °C. In the second heating, the heating time was 20 hours and the heating temperature was 870 °C.

(Example 2)

A shaped article was produced in the same manner as in Example 1, except that the scan line-to-scan line pitch was 0.06 mm in the laser beam application to the layers.

(Example 3)

A shaped article was produced in the same manner as in Example 2, except that the scan rotation angle was 67 degrees.

(Example 4)

A shaped article was produced in the same manner as in Example 1, except that the scan line-to-scan line pitch was 0.07 mm in the laser beam application to the layers.

(Example 5)

A shaped article was produced in the same manner as in Example 1, except that the scan line-to-scan line pitch was 0.08 mm in the laser beam application to the layers.

(Comparative Example 1)

A shaped article was produced in the same manner as in Example 1, except that the scan line-to-scan line pitch was 0.04 mm in the laser beam application to the layers.

(Comparative Example 2)

A shaped article was produced in the same manner as in Example 1, except that the scan line-to-scan line pitch was 0.09 mm in the laser beam application to the layers.

(Comparative Example 3)

A shaped article was produced in the same manner as in Example 1, except that the scan line-to-scan line pitch was 0.10 mm in the laser beam application to the layers.

The conditions of the production of the shaped articles of Examples 1 to 5 and Comparative Examples 1 to 3 are shown in Table 1. Table 1 further shows the value (L/D) of the scan line-to-scan line pitch L divided by the laser spot diameter D.

[Table 1]

|  | Scan line-to-scan line pitch L (mm) | L/D | Laser scan speed (mm/s) | Laser output (W) | Scan rotation angle (degrees) |
|---|---|---|---|---|---|
| Example 1 | 0.05 | 0.625 | 1000 | 180 | 90 |
| Example 2 | 0.06 | 0.750 | 1000 | 180 | 90 |
| Example 3 | 0.06 | 0.750 | 1000 | 180 | 67 |
| Example 4 | 0.07 | 0.875 | 1000 | 180 | 90 |
| Example 5 | 0.08 | 1.000 | 1000 | 180 | 90 |
| Comparative Example 1 | 0.04 | 0.500 | 1000 | 180 | 90 |
| Comparative Example 2 | 0.09 | 1.125 | 1000 | 180 | 90 |
| Comparative Example 3 | 0.10 | 1.250 | 1000 | 180 | 90 |

(Calculation of degree of orientation of intermediate article)

Each of the intermediate articles of Examples 1 to 5 and Comparative Examples 1 to 3 was cut along a plane perpendicular to the longitudinal direction (layer stacking direction), and the degree of orientation in { 100} plane in the cut surface was calculated. For this calculation, SEM-SU5000 manufactured by Hitachi, Ltd. and Pegasus Digiview 5 manufactured by EDAX/TSL were used as EBSD devices, and OIM Data Collection/OIM Analysis ver. 8 manufactured by EDAX/TSL was used as analysis software.

More specifically, the measurement of the degree of orientation in { 100} plane was preceded by a pretreatment, in which the cut surface was mechanically polished with waterproof abrasive paper and diamond abrasive grain and then subjected to polish finishing using colloidal silica. This pretreatment is intended to ensure the measurement accuracy by reducing the number of points unsuitable for the measurement. Such a pretreatment is commonly used in EBSD measurement. After the pretreatment, Kikuchi lines were measured for a 900 $\mu$m $\times$ 900 $\mu$m region of the cut surface with a step size of 3 $\mu$m, and the Kikuchi lines were analyzed by the analysis software to find the degree of orientation in { 100} plane.

(Calculation of crystal grain aspect ratio of shaped article)

Each of the shaped articles of Examples 1 to 5 and Comparative Examples 1 to 3 was cut along a plane parallel to the longitudinal direction (layer stacking direction), and the crystal grain aspect ratio in an observation zone on the cut surface was calculated. This calculation was carried out using the same EBSD devises and analysis software as the calculation of the degree of orientation.

The measurement of the crystal grain aspect ratio was preceded by the same pretreatment as the measurement of the degree of orientation. After the pretreatment, Kikuchi lines were measured for a 1800 $\mu$m $\times$ 1800 $\mu$m region of the cut surface with a step size of 6 $\mu$m, and the Kikuchi lines were analyzed by the analysis software to find the crystal grain aspect ratio. In the calculation of the crystal grain aspect ratio, grain boundaries were defined between adjacent measurement points between which there was an orientation difference of 15° or more.

The values of the degree of orientation of the intermediate articles of Examples 1 to 5 and Comparative Examples 1 to 3 and the values of the crystal grain aspect ratio of the shaped articles of Examples 1 to 5 and Comparative Examples 1 to 3 are shown in Table 2.

[Table 2]

|  | Degree of orientation of intermediate article (%) | Crystal grain aspect ratio |
|---|---|---|
| Example 1 | 35 | 2.93 |
| Example 2 | 59 | 2.95 |
| Example 3 | 63 | 2.99 |
| Example 4 | 77 | 2.94 |
| Example 5 | 39 | 2.71 |
| Comparative Example 1 | 9 | 2.62 |
| Comparative Example 2 | 26 | 2.37 |
| Comparative Example 3 | 20 | 2.21 |

As is evident from Table 2, in the shaped articles of Examples 1 to 5 where the scan line-to-scan line pitch in the laser beam application to the layers was adjusted to allow the LID to fall within the range of 0.6 to 1.1, the crystal grain aspect ratio was 2.70 or more. In contrast, in the shaped articles of Comparative Examples 1 to 3 where the LID was less than 0.6 or more than 1.1, the crystal grain aspect ratio was less than 2.70.

The above difference in aspect ratio is presumably due to the degree of orientation of the intermediate articles. Specifically, in the intermediate articles of Example 1 to 5, the degree of orientation was 30% or more, while in the shaped articles of Comparative Examples 1 to 3, the degree of orientation was less than 30%. In particular, in Examples 1 to 4 where the LID was in the range of 0.6 to 0.9, the degree of orientation of the intermediate article was 35% or more, and the crystal grain aspect ratio of the shaped article was 2.90 or more.

In the case where the HIP treatment is performed as the heat treatment, the crystal orientation in the shaped article is random unlike that in the intermediate article, and the degree of orientation of the shaped article is low.

(Creep rupture test)

A rod-shaped test specimen as shown in FIG. 4 was cut out from each of the shaped articles of Examples 1 to 5 and Comparative Examples 1 to 3. This test specimen was pulled in the longitudinal direction, and the time to rupture of the test specimen was measured. The temperature of the test specimen was 980 °C, and the tensile stress was 90 MPa.

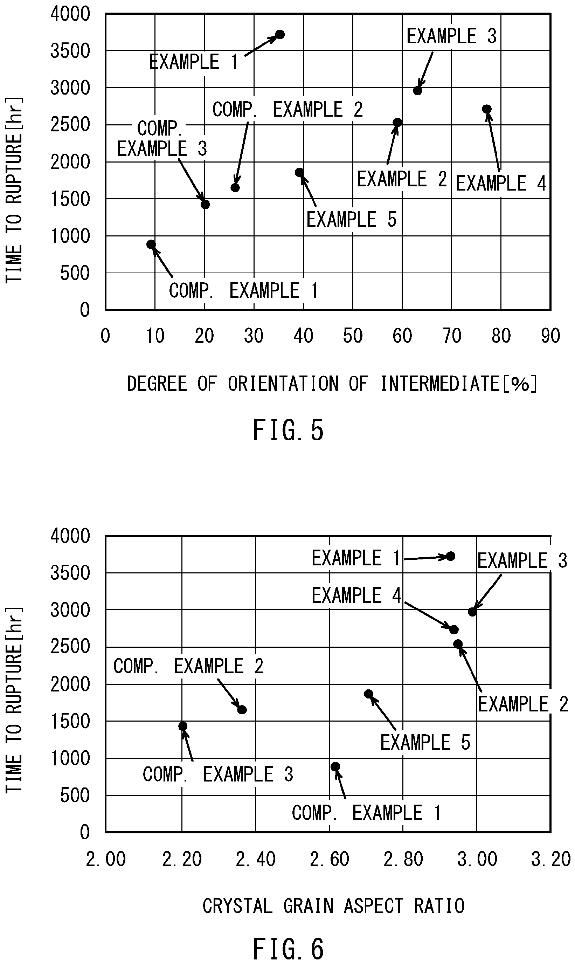

Table 3 shows the results of the creep rupture test. FIG. 5 shows the relationship between the degree of orientation of the intermediate article and the time to rupture in the creep rupture test for Examples 1 to 5 and Comparative Examples 1 to 3.

[Table 3]

|  | Time to rupture (hr) |
|---|---|
| Example 1 | 3712 |
| Example 2 | 2539 |
| Example 3 | 2968 |
| Example 4 | 2727 |
| Example 5 | 1861 |
| Comparative Example 1 | 888 |
| Comparative Example 2 | 1649 |
| Comparative Example 3 | 1429 |

As is evident from Table 3 and FIG. 5, the time to rupture was as short as less than 1800 hours in Comparative Examples 1 to 3 where the LID was less than 0.6 or more than 1.1. In contrast, in Examples 1 to 5 where the LID was in the range of 0.6 to 1.1, the time to rupture was as long as more than 1800 hours. In particular, in Examples 1 to 4 where the LID was in the range of 0.6 to 0.9, the time to rupture was fairly long and more than 2500 hours. In Example 1, the time to rupture was considerably long and more than 3500 hours. This is presumably because in Example 1, the rupture occurred at a different site of the specimen than in the other examples and the comparative examples.

FIG. 6 shows the relationship between the crystal grain aspect ratio of the shaped article and the time to rupture in the creep rupture test for Examples 1 to 5 and Comparative Examples 1 to 3. FIG. 6 reveals that the greater the crystal grain aspect ratio of the shaped article was, the longer the time to rupture was.

**Claims**

1. A shaped article production method comprising:

    fabricating an intermediate article by powder bed fusion using a powder of a gamma prime precipitation strengthening Ni-based alloy; and
    heat-treating the intermediate article, wherein
    the Ni-based alloy contains, in percent by mass, 7.0 to 17.0% Cr, 7.0 to 12.0% Co, 5.0 to 8.0% Al + Ti, 2.0 to 12.0% W, 1.5 to 4.4% Nb + Ta, 2.3% or less Mo, 0.3% or less C, 2.0% or less Hf, and 0.2% or less Zr,
    the fabricating the intermediate article includes applying a laser beam to a layer of the powder along scan lines parallel to one another, and
    in applying the laser beam, a value obtained by dividing a pitch between the scan lines by a laser spot diameter is in the range of 0.6 to 1.1.

2. The shaped article production method according to claim 1, wherein the Ni-based alloy contains, in percent by mass, 7.0 to 10.0% Cr, 8.0 to 11.0% Co, 5.0 to 7.5% Al + Ti, 8.0 to 11.0% W, 2 to 4% Nb + Ta, 0.2 to 1.0% Mo, 0.01 to 0.2% C, 0.5 to 2.0% Hf, and 0.2% or less Zr.

3. An intermediate article made of a Ni-based alloy, the intermediate article including columnar crystal grains of a dendritic crystal structure, wherein

    the Ni-based alloy contains, in percent by mass, 7.0 to 17.0% Cr, 7.0 to 12.0% Co, 5.0 to 8.0% Al + Ti, 2.0 to 12.0% W, 1.5 to 4.4% Nb + Ta, 2.3% or less Mo, 0.3% or less C, 2.0% or less Hf, and 0.2% or less Zr,
a spacing between branches of a primary dendritic crystal of the dendritic crystal structure is less than 3 $\mu$m, and
a degree of orientation in {100} plane in a cut surface perpendicular to a longitudinal direction of the columnar crustal grains is 30% or more.

4. The intermediate article according to claim 3, wherein the Ni-based alloy contains, in percent by mass, 7.0 to 10.0% Cr, 8.0 to 11.0% Co, 5.0 to 7.5% Al + Ti, 8.0 to 11.0% W, 2 to 4% Nb + Ta, 0.2 to 1.0% Mo, 0.01 to 0.2% C, 0.5 to 2.0% Hf, and 0.2% or less Zr.

5. A shaped article made of a Ni-based alloy, the shaped article including columnar crystal grains of a non-dendritic crystal structure, wherein

the Ni-based alloy contains, in percent by mass, 7.0 to 17.0% Cr, 7.0 to 12.0% Co, 5.0 to 8.0% Al + Ti, 2.0 to 12.0% W, 1.5 to 4.4% Nb + Ta, 2.3% or less Mo, 0.3% or less C, 2.0% or less Hf, and 0.2% or less Zr, and
when shapes of the columnar crystal grains in an observation zone on a cut surface parallel to a longitudinal direction of the columnar crystal grains are approximated by ellipses each of which has an area equal to that of a corresponding one of the columnar crystal grains, a crystal grain aspect ratio calculated by dividing a sum of major-to-minor axis ratios of the ellipses by the number of the columnar crystal grains in the observation zone is 2.70 or more.

6. The shaped article according to claim 5, wherein the Ni-based alloy contains, in percent by mass, 7.0 to 10.0% Cr, 8.0 to 11.0% Co, 5.0 to 7.5% Al + Ti, 8.0 to 11.0% W, 2.0 to 4.0% Nb + Ta, 0.2 to 1.0% Mo, 0.01 to 0.2% C, 0.5 to 2.0% Hf, and 0.2% or less Zr.

FIG. 1

15 DEGREES

MEASUREMENT SURFACE

FIG. 2

FIG. 3

FIG. 4

FIG. 5

FIG. 6

## INTERNATIONAL SEARCH REPORT

| International application No. |
|---|
| **PCT/JP2021/033348** |

### A. CLASSIFICATION OF SUBJECT MATTER

**B22F 10/366**(2021.01)i; **B22F 1/00**(2022.01)i; **B22F 3/24**(2006.01)i; **B22F 10/38**(2021.01)i; **B33Y 10/00**(2015.01)i; **B33Y 70/00**(2020.01)i; **B33Y 80/00**(2015.01)i; **C22C 19/05**(2006.01)i
FI: B22F10/366; B22F1/00 M; B22F10/38; B22F3/24 C; C22C19/05 C; B33Y10/00; B33Y70/00; B33Y80/00

According to International Patent Classification (IPC) or to both national classification and IPC

### B. FIELDS SEARCHED

Minimum documentation searched (classification system followed by classification symbols)

B22F10/366; B22F1/00; B22F3/24; B22F10/38; B33Y10/00; B33Y70/00; B33Y80/00; C22C19/05

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2019-73796 A (GENERAL ELECTRIC COMPANY) 16 May 2019 (2019-05-16) claims, paragraphs [0002]-[0005], [0031] | 1-6 |
| Y | WO 2017/195744 A1 (MITSUBISHI HEAVY IND LTD) 16 November 2017 (2017-11-16) claims, paragraphs [0002]-[0007], [0015], fig. 1 | 1-6 |
| Y | JP 2017-8929 A (GENERAL ELECTRIC COMPANY) 12 January 2017 (2017-01-12) paragraph [0004] | 1-6 |
| Y | CN 108941560 A (CENTRAL SOUTH UNIVERSITY) 07 December 2018 (2018-12-07) paragraphs [0053]-[0136] | 1-6 |
| A | JP 2014-169500 A (ALSTOM TECHNOLOGY LTD) 18 September 2014 (2014-09-18) entire text, all drawings | 1-6 |
| A | JP 2019-35144 A (MITSUBISHI HITACHI POWER SYS) 07 March 2019 (2019-03-07) entire text, all drawings | 1-6 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 November 2021** | **30 November 2021** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

International application No.

**PCT/JP2021/033348**

**C.      DOCUMENTS CONSIDERED TO BE RELEVANT**

| Category* | Citation of document, with indication, where appropriate, of the relevant passages | Relevant to claim No. |
|---|---|---|
| P, A | JP 2020-147782 A (KAWASAKI HEAVY IND LTD) 17 September 2020 (2020-09-17) entire text, all drawings | 1-6 |

Form PCT/ISA/210 (second sheet) (January 2015)

**INTERNATIONAL SEARCH REPORT**
Information on patent family members

International application No.

**PCT/JP2021/033348**

| Patent document cited in search report | | | Publication date (day/month/year) | Patent family member(s) | | | Publication date (day/month/year) |
|---|---|---|---|---|---|---|---|
| JP | 2019-73796 | A | 16 May 2019 | US | 2019/0070663 | A1 | |
| | | | | claims, paragraphs [0002]-[0005], [0037] | | | |
| | | | | EP | 3453474 | A1 | |
| | | | | CN | 109454235 | A | |
| WO | 2017/195744 | A1 | 16 November 2017 | US | 2021/0040594 | A1 | |
| | | | | claims, paragraphs [0002]-[0007], [0021], fig. 1 | | | |
| | | | | EP | 3391983 | A1 | |
| JP | 2017-8929 | A | 12 January 2017 | US | 2016/0354842 | A1 | |
| | | | | paragraph [0004] | | | |
| | | | | EP | 3103570 | A1 | |
| | | | | CN | 106216671 | A | |
| CN | 108941560 | A | 07 December 2018 | US | 2021/0170487 | A1 | |
| | | | | paragraphs [0050]-[0122] | | | |
| | | | | WO | 2020/019404 | A1 | |
| JP | 2014-169500 | A | 18 September 2014 | US | 2014/0242400 | A1 | |
| | | | | EP | 2772329 | A1 | |
| | | | | CA | 2843450 | A | |
| | | | | CN | 104014799 | A | |
| | | | | KR | 10-2014-0109814 | A | |
| | | | | RU | 2014107541 | A | |
| | | | | KR | 10-2016-0099526 | A | |
| JP | 2019-35144 | A | 07 March 2019 | US | 2019/0048451 | A1 | |
| | | | | EP | 3441489 | A1 | |
| | | | | CN | 109385589 | A | |
| | | | | KR | 10-2019-0017664 | A | |
| | | | | RU | 2698038 | C | |
| JP | 2020-147782 | A | 17 September 2020 | WO | 2020/184519 | A1 | |

Form PCT/ISA/210 (patent family annex) (January 2015)

**REFERENCES CITED IN THE DESCRIPTION**

**Patent documents cited in the description**

- JP 2013096013 A